# EUROPÄISCHE PATENTSCHRIFT

(11) **EP 2 024 125 B1**
(45) Veröffentlichungstag und Bekanntmachung des Hinweises auf die Patenterteilung: **02.12.2009**
(21) Anmeldenummer: 07710524.5
(22) Anmeldetag: 21.03.2007
(51) Int. Cl.: B23K 9/095, B23K 9/10

(54) **SCHECKKARTEN-FERNREGLER MIT ELEKTRODENKONTAKTEN ZUR ERHÖHUNG UND ZUR VERRINGERUNG EINES SCHWEISSPARAMETERS UND MIT EINER ANZEIGE**
CARD-FORMAT REMOTE CONTROLLER WITH ELECTRODE CONTACTS TO INCREASE OR REDUCE A WELDING PARAMETER AND WITH READOUT
COMMANDE À DISTANCE AYANT LA FORME D'UNE CARTE DE CRÉDIT ET POURVUE DE CONTACTS D'ÉLECTRODE PERMETTANT D'AUGMENTER ET DE RÉDUIRE UN PARAMÈTRE DE SOUDAGE ET D'UN AFFICHEUR

(30) Priorität: 26.05.2006 AT 9112006
(43) Veröffentlichungstag der Anmeldung: 18.02.2009
(73) Patentinhaber: Fronius International GmbH, 4643 Pettenbach (AT)
(72) Erfinder: FEITZLMAIER, Thomas, 4073 Wilhering (AT); KNOLL, Thomas, 4050 Traun (AT)
(74) Vertreter: Sonn & Partner Patentanwälte
(86) Internationale Anmeldenummer: PCT/AT2007/000134
(87) Internationale Veröffentlichungsnummer: WO 2007/137310

(56) Entgegenhaltungen:
- JP-A- 11 123 550
- US-A- 2 175 891
- US-A- 2 526 597
- US-B1- 6 570 132

## Beschreibung

Die Erfindung bezieht sich auf einen Fernregler für ein Schweißgerät gemäß dem Oberbegriff des Anspruchs 1 (siehe, z.B., US 2 175 891).

Ein Fernregler der gegenständlichen Art ist aus der US 6 040 555 A bekannt, mit dem ein Ein- und Ausschalten sowie Zünden des Schweißgeräts sowie das Verändern von Schweißparametern am Ort des Schweißbrenners entfernt vom Schweißgerät ermöglicht wird. Zu diesem Zweck weist der Fernregler mehrere Kontaktelemente auf, die mit korrespondierenden elektronischen Schaltkreisen verbunden sind, welche bei Berührung des Kontaktelements ein entsprechendes Steuersignal an das Schweißgerät senden. Für den Betrieb der elektronischen Schaltkreise und zur Erzeugung der Steuersignale ist eine Batterie notwendig. Dadurch weist der Fernregler eine relativ große Baugröße auf.

Die DE 33 29 216 A1 zeigt einen kabellosen Fernregler für ein Schweißgerät mit zumindest zwei Kontakten, von welchen einer für die Kontaktierung mit dem Werkstück und der andere für die Kontaktierung mit der Schweißelektrode ausgebildet ist. Je nach Reihenfolge der Kontaktierung wird ein Signal mit einer entsprechenden Frequenz gebildet und dem Schweißstrom überlagert, wodurch eine Erhöhung oder Verringerung des Schweißstromes erzielt werden kann.

Aus der EP 0 575 082 A2 ist ein Fernregler zur Parametereinstellung für ein Schweißgerät bekannt, bei dem die Kommunikation zwischen dem Fernregler und der Stromquelle und/oder einer Hilfsvorrichtung des Schweißgerätes drahtlos über Funksignale und drahtgebunden erfolgen kann. Die drahtgebundene Signalübertragung erfolgt hierbei über das Schweißkabel, das mit einem Sender und einem Empfänger für Funksignale induktiv oder kapazitiv gekoppelt ist, wodurch Informationen zwischen dem Fernregler und der Stromquelle und/oder der Hilfsvorrichtung des Schweißgerätes uni- oder bidirektional übertragen werden können.

Es gehen aus der EP 0 575 082 A2 somit eine Vorrichtung und ein Verfahren hervor, mit dem die Signal- und/oder Datenübertragung zwischen einem Fernregler und einer Stromquelle eines Schweißgerätes über das Schweißkabel des Schweißgerätes möglich ist.

Aus dem Stand der Technik sind derartige oder ähnliche Verfahren zur Signalübertragung über das Schweißkabel und entsprechend ausgebildete Fernregler hinreichend bekannt. Hierbei ist am Fernregler ein elektrischer Kontakt vorgesehen, an den die stromführende Schweißelektrode des Schweißbrenners angelegt werden kann, wobei eine Steuervorrichtung des Schweißgerätes den Fernregler als solchen erkennt. Diese bekannten Fernregler weisen zur Veränderung von Parametern des Schweißgerätes ein oder mehrere Einstellorgane, beispielsweise analoge Drehregler bzw. Potentiometer, Taster oder berührsensitive Folien auf, die von einem Benutzer mit der Hand zu bedienen sind. Als nachteilig erweist sich bei derartigen Fernreglern, dass die verwendeten Einstellorgane hohe Bauteilkosten verursachen und auch die Herstellungskosten des Fernreglers durch einen großen Fertigungsaufwand hoch sind. Weiters ist die Kompaktheit dieser Fernregler durch die Größe der Bauelemente für die Einstellorgane eingeschränkt und es sind diese Fernregler daher schwierig handzuhaben bzw. zu transportieren. Insbesondere bei häufig vorzunehmenden Einstellungen zwischen unterschiedlichen Schweißvorgängen oder Parameterkorrekturen erweist sich die manuelle Einstellung über Einstellorgane als zeitaufwändig für einen Benutzer.

Weiters sind aus der WO 03/022503 A1 ein Fernregler und eine Bedieneinheit für ein Schweißgerät bekannt, mit dem eine menügeführte Einstellung verschiedenster Parameter eines Schweißgerätes möglich ist. Dieser Fernregler ist durch die vorhandenen Schnittstellen und Einstellorgane voluminös in seiner Bauweise, was sich nachteilig auf seine Handhabbarkeit und Transportierbarkeit auswirkt. Weiters ist der Fernregler aufgrund der vielen benötigten Bauteile wenig robust und dessen Herstellkosten sind sehr hoch.

Die US 2,175,891 A zeigt eine Regeleinrichtung zur ferngesteuerten Regelung eines Schweißgeräts oder dgl. mit zwei oder mehr Kontaktelementen zur Herstellung einer Verbindung mit der Elektrode des Schweißgeräts und dem Werkstück sowie einer Steuereinrichtung, welche durch Frequenzgeneratoren gebildet ist, wobei die erzeugte Frequenz zur Regelung des Stroms der Stromquelle des Schweißgeräts verwendet wird. Der Fernregler weist eine Anzeige für die zwischen der Elektrode und dem Werkstück anliegende Spannung auf.

Die US 6,570,132 B1 beschreibt eine Fernreglereinheit für ein Schweißgerät, welche eine Logikeinheit und eine Einstellvorrichtung aufweist.

Die Aufgabe der vorliegenden Erfindung liegt darin, die Herstellkosten eines Fernreglers für ein Schweißgerät zu senken. Eine Teilaufgabe der Erfindung liegt darin, die Handhabbarkeit eines Fernreglers zu verbessern. Eine weitere Teilaufgabe des Fernreglers liegt darin, die Robustheit bzw. Haltbarkeit eines Fernreglers zu verbessern.

Der erfindungsgemäße Fernregler ist im Anspruch 1 definiert. Vorteilhaft ist hierbei, dass beim Fernregler keinerlei Einstellorgane, wie Potentiometer oder Inkrementalgeber, vorhanden sind, sondern die Verstellung der Sollwerte direkt über die Elektrodenkontakte erfolgt. Damit können die Herstellungskosten des Fernreglers wesentlich verringert werden, da für die Herstellung die Bestückung der Leiterplatte vollautomatisch erfolgen kann. Dagegen muss bei den bekannten Fernreglern mit Einstellorganen der Aufbau bzw. Zusammenbau händisch oder in aufwändigen Arbeitsgängen erfolgen. Ein weiterer Vorteil liegt darin, dass bei Kontaktierung eines Elektrodenkontaktes mit der Elektrode des Schweißgerätes eine Spannungsversorgung des Fernreglers erfolgt und anschließend sofort eine Aktion bzw. ein Funktionsaufruf, beispielsweise die Veränderung eines Schweißparameters, ausgelöst wird. Der Elektrodenkontakt ermöglicht neben der durch diesen durchführbaren Aktion auch die Energieversorgung des Fernreglers. Damit wird auch eine bessere Handhabung für den Fernregler erreicht, da der Benutzer in einfacher Weise nur durch entsprechendes Kontaktieren der Elektrode mit dem Elektrodenkontakt eine Verstellung vornehmen kann und der Benutzer den Schweißbrenner nicht aus der Hand legen muss, um eine Einstellung mit dem Fernregler vorzunehmen. Bei bekannten Fernreglern mit Einstellorganen muss der Benutzer den Fernregler mit der Elektrode kontaktieren, und gleichzeitig das Einstellorgan betätigen. Weiters sind bei erfindungsgemäßen Fernreglern keine beweglichen Teile zur Realisierung eines vollfunktionalen Fernreglers erforderlich, wodurch ein robuster und wenig fehleranfälliger Fernregler geschaffen wird. Durch diesen Aufbau kann der Fernregler sehr klein beispielsweise in Größe einer Scheckkarte ausgeführt werden. Dadurch, dass die Steuereinrichtung mit einer Anzeige (bzw. mit Anzeigemitteln) verbunden ist, die zur Visualisierung des Werts bzw. des Typs des zu verändernden Schweißparameters ausgebildet ist, kann der Benutzer jederzeit den Wert bzw. Typ des Schweißparameters ansehen und gleichzeitig den Verstellvorgang beobachten und somit eine exakte Einstellung des Schweißgeräts vornehmen. Ein Kontaktelement des Fernreglers kann mit mehreren Funktionen belegt sein, beispielsweise Anzeige des aktuellen Werts und der Verstellung des Werts eines Schweißparameters. Hierbei kann der Schweißer durch kurzzeitiges Kontaktieren des Kontaktelements mit der Elektrode den gespeicherten bzw. aktuellen Parameterwert anzeigen und andererseits durch längeres Kontaktieren die Verstellung einleiten, so dass der gespeicherte Wert erhöht oder verringert wird, je nach dem, welchen Elektrodenkontakt der Schweißer mit der Elektrode kontaktiert, wobei der veränderte Parameterwert gleichzeitig, d.h. online, an das Schweißgerät übertragen werden kann.

Von Vorteil ist, wenn die Steuereinrichtung einen Speicher aufweist, in dem zumindest der zuletzt über einen der zumindest zwei Elektrodenkontakte eingestellte oder aufgerufene Schweißparameter hinterlegt ist. Dadurch kann der zuletzt eingestellte bzw. verarbeitete Wert, beispielsweise ein Wert eines Schweißparameters bzw. der Typ des Schweißparameters, einfach zur Weiterverarbeitung, beispielsweise zur Anzeige an Anzeigemitteln, wiederverwendet werden. Weiters kann der Benutzer beim Wechseln des Schweißgerätes einen gespeicherten Wert zur Konfiguration des Schweißgerätes sofort wieder verwenden und er muss nicht erneut eine Werteinstellung über die Kontaktelemente vornehmen. Der Schweißer kann unabhängig vom Schweißgerät schnell und einfach seine voreingestellten Werte an dieses übermitteln.

Vorteilhafterweise ist die Steuereinrichtung zur Ausgabe eines in Abhängigkeit des Werts eines anliegenden bzw. verstellten Schweißparameters ermittelten, insbesondere berechneten, Signals ausgebildet, wobei das Signal an zumindest ein Kontaktelement für die Elektrode angelegt wird. Somit kann der von der Steuereinrichtung ermittelte Wert bzw. ein aus diesem generiertes Signal über einen der Elektrodenkontakte abgegriffen werden, und dieses Signal und die darin enthaltenen Informationen über die Elektrode in einfacher Weise an die Steuervorrichtung bzw. die Stromquelle des Schweißgerätes übersandt werden.

Wenn die Anzeige zur Darstellung eines anteilsmäßigen, insbesondere prozentuellen, Werts eines Schweißparameters ausgebildet ist, kann die Einstellung eines Werts für einen Benutzer sehr intuitiv erfolgen und gegebenenfalls durch Abstufung in prozentuellen Schritten die Anzahl der Anzeigestellen der Anzeigeeinrichtung und somit noch ein kleiner Aufbau des Fernreglers ermöglicht werden.

Die Anzeige kann durch ein Display oder durch eine Skala bildende Leuchtmittel, insbesondere LEDs, gebildet sein, wodurch eine kostengünstige und zweckmäßige Anzeigeeinrichtung geschaffen wird.

Gemäß einem weiteren Merkmal der Erfindung kann die Steuereinrichtung mit einer Anzeige (bzw. mit Anzeigemitteln) zur Anzeige eines vorliegenden Kontaktes der Kontaktelemente mit der Elektrode und dem Werkstück verbunden sein. Dadurch kann ein Benutzer sofort den Betriebszustand bzw. eine korrekte Inbetriebnahme des Fernreglers überprüfen.

Weiters kann die Steuereinrichtung mit einer Anzeige zur Anzeige der Polarität an dem mit der Elektrode in Verbindung stehenden Kontaktelement verbunden sein, wodurch die an der Elektrode des Schweißgerätes anliegende bzw. eingestellte Polarität in vorteilhafter Weise sofort am Fernregler ablesbar ist.

Wenn die Steuereinrichtung eine Spannungsversorgung, insbesondere eine Leistungselektronik, zur Spannungswandlung der Leerlaufspannung des Schweißgerätes in eine entsprechende Spannung zur Versorgung der Komponenten der Steuereinrichtung aufweist, kann die Versorgung der Komponenten des Fernreglers über das Schweißgerät erfolgen.

Gemäß einem weiteren Merkmal der Erfindung ist vorgesehen, dass die Steuereinrichtung eine Logikschaltung, insbesondere einen Mikrokontroller, aufweist. Die Spannungsversorgung wandelt die Leerlaufspannung eines Schweißgerätes in eine entsprechende Spannung für die Komponenten des Fernreglers, insbesondere die Logikschaltung um. Dadurch wird kein permanenter Energiespeicher im Fernregler benötigt, da der Fernregler über das Schweißgerät mit Energie versorgt wird. Somit kann der Fernregler wiederum in einer sehr kleinen Baugröße realisiert werden und können gleichzeitig auch die Kosten gesenkt werden. Weiters ist dadurch der Fernregler ständig einsatzbereit und wartungsfrei.

Insbesondere ist bei Verwendung eines Mikrokontrollers eine einfache Programmierung des Fernreglers möglich und es können gleichzeitig Bauelemente eingespart werden, wodurch das Gewicht und die Baugröße des Fernreglers reduziert werden. Über die Logikschaltung kann in vorteilhafter Weise ein Zustand am Ausgang der Steuereinrichtung bzw. des Fernreglers in Abhängigkeit von den an den Kontaktelementen anliegenden Signalen festgelegt werden.

Bei einer Ausführungsvariante, bei der die Steuereinrichtung ein Schaltelement zur Erzeugung eines bevorzugt hochfrequenten Modulationssignals zur Einkopplung in die Leerlaufspannung der Elektrode aufweist, können Informationen vom Fernregler über die modulierte Leerlaufspannung des Schweißgerätes an dieses übertragen werden. Die Steuervorrichtung des Schweißgerätes eine entsprechende Vorrichtung zur Auswertung bzw. Demodulation der Leerlaufspannung auf. Somit können ohne zusätzliche Sende- und Empfangseinrichtungen am Fernregler vorgenommene Einstellungen über die Elektrode bzw. die Schweißleitungen des Schweißgerätes an dessen Steuervorrichtung übertragen werden.

Insbesondere wird dadurch, dass das Schaltelement an einem Steuereingang mit einem Ausgang der Logikschaltung und weiters mit der Spannungsversorgung verbunden ist und ein Ausgang des Schaltelements mit zumindest einem der Kontaktelemente gekoppelt ist, eine besonders geeignete und einfache Vorrichtung zur Erzeugung einer Modulationsfrequenz durch einen Fernregler geschaffen.

Dadurch, dass der Werkstückkontakt zur Kontaktierung eines Werkstücks an der Rückseite des Gehäuses angeordnet ist und der Werkstückkontakt bevorzugt magnetisch ausgebildet ist, kann durch einfaches Auflegen des Fernreglers auf das Werkstück ein guter Kontakt zum Werkstück hergestellt werden, wobei ein Benutzer seinen Arbeitsplatz im Bereich des Werkstücks nicht verlassen muss. Durch eine magnetische Ausbildung des Werkstückkontakts wird der Fernregler selbstständig am Werkstück gehalten, wodurch die Bedienung erleichtert wird.

Wenn das Gehäuse im Wesentlichen Scheckkarten-förmig ausgebildet ist, kann durch die sehr kompakten Ausmaße des Fernreglers dieser sehr handlich ausgebildet werden, wodurch der Schweißer diesen leicht transportieren kann, in dem er den Fernregler einfach in eine Tasche einsteckt.

Bei einer besonders vorteilhaften Ausführungsvariante weist das Gehäuse eine Breite von 20 bis 100 mm, insbesondere 40 bis 70 mm, eine Länge von 50 bis 150 mm, insbesondere 60 bis 120 mm, und eine Dicke von 5 bis 30 mm, insbesondere 10 bis 20 mm, auf.

Das Gehäuse kann zumindest teilweise transparent ausgebildet sein.

Die Steuereinrichtung und gegebenenfalls die Anzeigen können im Gehäuse integriert, insbesondere eingegossen, sein, wobei nur Kontaktflächen der Kontaktelemente von außen zugänglich sind. Somit können Komponenten, wie beispielsweise die Anzeigen, vollständig vom Gehäuse umschlossen, beispielsweise eingegossen, werden, wodurch sich eine sehr robuste und kompakte Ausgestaltung des Gehäuses ergibt. Auf die Anzeigen unter dem transparenten Teil des Gehäuses kann der Benutzer blicken. Weiters sind keine Sichtfenster oder ähnliche Teile notwendig, wodurch die Herstellkosten des Fernreglers minimiert werden. Des Weiteren sind die empfindlichen Komponenten des Fernreglers vor Schmutz bzw. Staub geschützt und gleichzeitig wird insbesondere durch das Eingießen erreicht, dass die Bauteile sehr gut vor Erschütterungen geschützt sind und keine Flüssigkeit in das Innere des Fernreglers eindringen kann.

Dadurch, dass ein weiteres Kontaktelement durch einen dritten Elektrodenkontakt gebildet ist, wobei der erste Elektrodenkontakt zur Anzeige des Werts bzw. Typs eines zu verstellenden Schweißparameters ausgebildet ist, wogegen die beiden weiteren Elektrodenkontakte zur Verstellung des Werts des Schweißparameters, insbesondere zur Erhöhung oder Verringerung des Wertes des Schweißparameters, ausgebildet sind, wird in vorteilhafter Weise erreicht, dass der Schweißer eine sehr einfache Bedienung des Fernreglers vorfindet, da jedem Elektrodenkontakt eine bestimmte Aufgabe zugewiesen ist. Auch wird damit eine schnelle Verstellung des Fernreglers ermöglicht bzw. kann bei einem Schweißgerätewechsel der gespeicherte Wert einfach auf das neue Schweißgerät übertragen werden, indem der Schweißer lediglich den Elektrodenkontakt für die Anzeigefunktion kontaktiert.

Bei einer weiteren Ausführungsvariante ist zumindest ein weiteres Kontaktelement durch einen Elektrodenkontakt gebildet, welcher zur Selektion eines Schweißparameters ausgebildet ist. Von Vorteil ist hierbei, dass der Schweißer durch den zusätzlichen Elektrodenkontakt weitere Typen von zu verstellenden Schweißparametern auswählen kann, wobei die Schweißparameter insbesondere zyklisch durchgeschaltet werden. Beispielsweise kann so zwischen den Parametertypen Strom, Spannung, Pulsweite, Frequenz, usw. durchgeschaltet werden. Es ist somit einfach möglich, dass mehrere einstellbare Schweißparameter über diesen Elektrodenkontakt hintereinander aufgerufen werden. Bei mehreren zusätzlichen Elektrodenkontakten können diese auch derart ausgestattet sein, dass jedem Elektrodenkontakt ein fixer Schweißparameter zugeordnet ist. Auch ist es möglich, dass bei zwei weiteren Elektrodenkontakten diese für unterschiedliche Richtungsweiterschaltungen ausgeführt werden, um die einzelnen Schweißparameter hintereinander abrufen zu können.

Dadurch, dass die Steuereinrichtung ein Sicherheitssystem zur vorzugsweise drahtlosen Absperrung oder Entsperrung des Schweißgerätes aufweist, kann der Fernregler zusätzlich als Schlüssel zur Inbetriebnahme eines Schweißgerätes verwendet werden, wodurch eine Verwendung des Schweißgerätes durch nicht autorisiertes Personal in vorteilhafter Weise verhindert werden kann.

In einer vorteilhaften Weiterbildung ist das Sicherheitssystem durch ein Funkübertragungssystem, insbesondere ein RFID-System, gebildet. Demgemäß weist der Fernregler ein eindeutiges Identifizierungsmerkmal auf. Die Verwendung eines RFID-Systems bzw. Transponders ist vorteilhaft, da diese Komponenten eine drahtlose Verwendung des Fernreglers ermöglichen und der Bedienungs- bzw. Tragekomfort des Fernreglers somit nicht eingeschränkt wird.

Die vorliegende Erfindung wird anhand der beigefügten, schematischen Zeichnungen näher erläutert.

Darin zeigen:
- Fig. 1: den erfindungsgemäßen Fernregler für ein Schweißgerät gemeinsam mit einer exemplarischen Ausführungsvariante eines Schweißgerätes in schematischer Seitenansicht;
- Fig. 2: eine Ausführungsvariante des Fernreglers in Draufsicht;
- Fig. 3: den Fernregler nach Fig. 2 in Seitenansicht gemäß Pfeil III in Fig. 2;
- Fig. 4: den in Betrieb genommenen Fernregler nach Fig. 2 in Sei tenansicht ;
- Fig. 5: eine zweite Ausführungsvariante des Fernreglers in Draufsicht;
- Fig. 6: eine dritte Ausführungsvariante des Fernreglers in Draufsicht;
- Fig. 7: eine vierte Ausführungsvariante des Fernreglers in Draufsicht;
- Fig. 8: eine fünfte Ausführungsvariante des Fernreglers in Schrägansicht; und
- Fig. 9: eine mögliche Ausgestaltung des erfindungsgemäßen Fern reglers, dargestellt als Blockschaltbild.

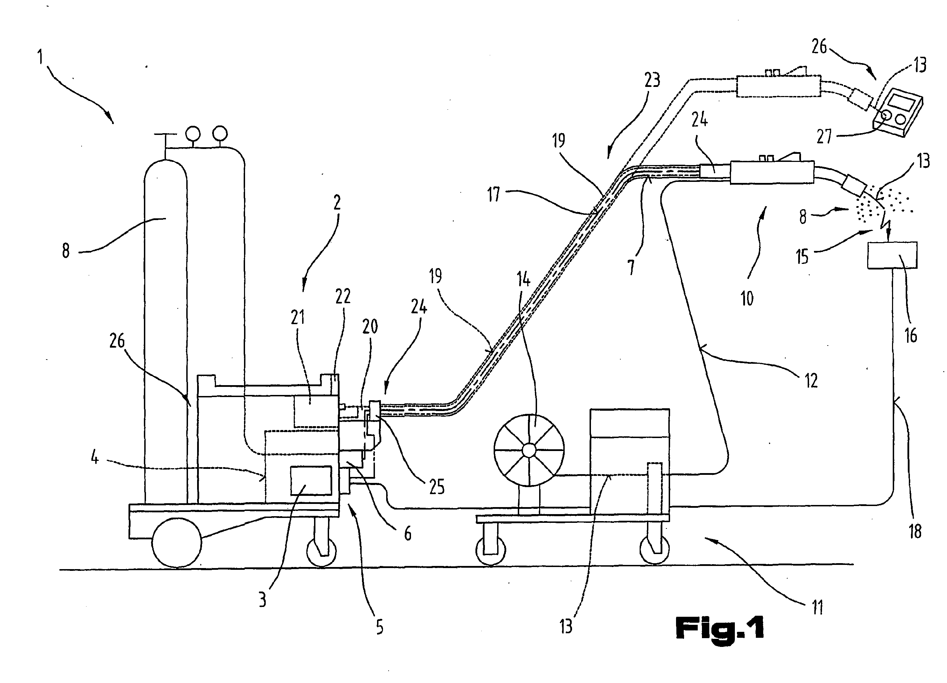

In Fig.1 ist ein Schweißgerät 1 bzw. eine Schweißanlage dargestellt, das bzw. die in Kombination mit der erfindungsgemäßen Komponente verwendet werden kann. Das Schweißgerät 1 ist hierbei für verschiedenste Schweißverfahren, wie z. B. MIG/MAG-Schweißen bzw. WIG/TIG-Schweißen oder Elektroden-Schweißverfahren usw., geeignet. Insbesondere kann das Schweißgerät 1 als tragbares Handschweißgerät, beispielsweise zum Schweißen mit Stabelektroden, ausgebildet sein.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 eine Elektrode 13 bzw. ein Schweißelement, beispielsweise ein Schweißdraht, von einer Vorratstrommel 14 in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist. Weiters besteht die Möglichkeit, dass das Schweißgerät 1 kein Drahtvorschubgerät 11 aufweist, wie dies beispielsweise beim Schweißen mit Stabelektroden der Fall ist.

Der Strom zum Aufbauen eines Lichtbogens 15 zwischen der Elektrode 13 und einem Werkstück 16 wird über eine Schweißleitung 17 vom Leistungsteil 3 der Schweißstromquelle 2 dem Schweißbrenner 10 bzw. der Elektrode 13 zugeführt, wobei das zu verschweißende Werkstück 16 über eine weitere Schweißleitung 18 ebenfalls mit dem Schweißgerät 1, insbesondere mit der Stromquelle 2, verbunden ist und somit über den Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine, für die im Flüssigkeitsbehälter 21 angeordnete Flüssigkeit, wie z.B. Wasser, verwendete Flüssigkeitspumpe, gestartet wird und somit eine Kühlung des Schweißbrenners 10 bzw. der Elektrode 13 bewirkt werden kann.

Das Schweißgerät 1 weist weiters eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 eingestellten Schweißparameter an die Steuervorrichtung 4 weitergeleitet, und von dieser werden anschließend die einzelnen Komponenten der Schweißanlage bzw. des Schweißgerätes 1 angesteuert bzw. entsprechende Sollwerte für die Regelung oder Steuerung vorgegeben.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine zum Stand der Technik zählende Verbindungseinrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung mit einem Gehäuse 25, insbesondere mit dem Grundgehäuse des Schweißgerätes 1, verbunden.

Grundsätzlich ist zu erwähnen, dass für die unterschiedlichen Schweißverfahren bzw. Schweißgeräte 1, wie beispielsweise MIG/MAG-Geräte oder Handgeräte für Stabelektroden, nicht alle zuvor benannten Komponenten verwendet bzw. eingesetzt werden müssen. Beispielsweise ist es auch möglich, dass der Schweißbrenner 10 als luftgekühlter Schweißbrenner 10 ausgeführt wird.

Weiters ist in Fig. 1 die durch einen Fernregler 26 gebildete erfindungsgemäße Komponente dargestellt. Der Fernregler 26 ist als eigenständige Bedieneinheit für einen Benutzer vorgesehen, wobei der Fernregler 26 und die Steuervorrichtung 4 des Schweißgerätes 1 zur Durchführung einer uni- oder bidirektionalen Signal- und/oder Datenübertragung ausgebildet sind. In strichlierten Linien ist jene Stellung des Schweißbrenners 10 bzw. der Elektrode 13 symbolisiert, in der diese Komponenten zum Signalaustausch mit dem Fernregler 26 verbunden sind, so dass der Fernregler 26 aktiviert ist. Zur Aktivierung des Fernreglers 26 ist dieser in den elektrischen Kreis des Schweißgerätes 1, welcher über die Schweißleitungen 17, 18 aufgebaut wird, eingebunden. Im gezeigten Ausführungsbeispiel ist die ein positives oder negatives Potential führende, erste Schweißleitung 17 des Schweißgerätes 1 mit dem Fernregler 26 elektrisch bzw. galvanisch verbunden, wobei der Fernregler 26 auch mit der weiteren Schweißleitung 18 des Schweißgerätes 1 und dem dort anliegenden Potential verbunden ist. Bevorzugt wird der Fernregler 26 bei Elektroden- oder WIG- bzw. TIG-Schweißgeräten eingesetzt.

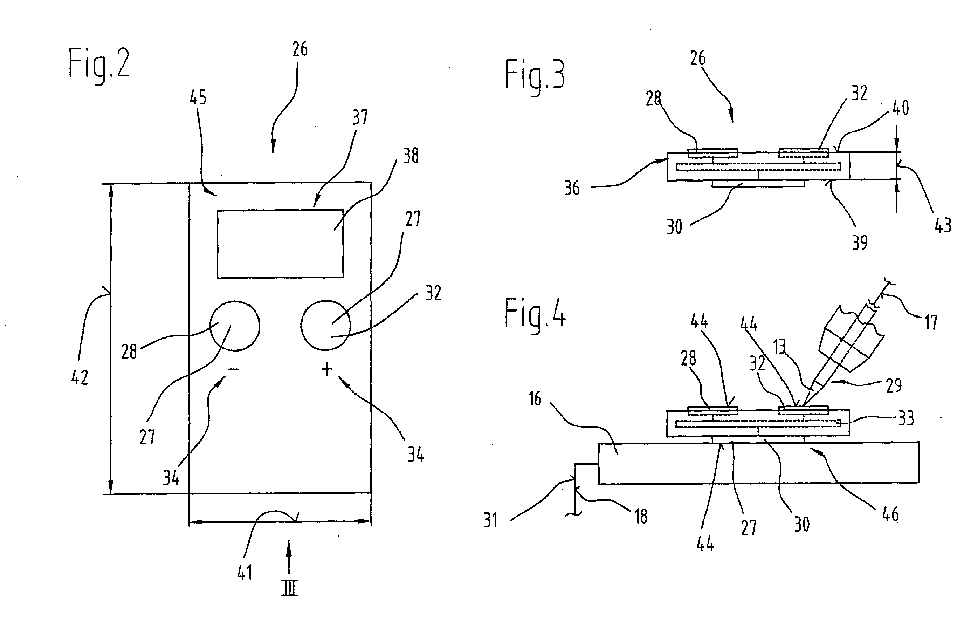

Aus den Fig. 2 bis 4 ist eine erste Ausführungsvariante eines erfindungsgemäßen Fernreglers 26 ersichtlich. Der Fernregler 26 weist mehrere Kontaktelemente 27 auf, die zur Herstellung einer elektrischen Verbindung mit dem Schweißgerät 1 bzw. einem Werkstück 16 ausgebildet sind. Ein erstes Kontaktelement 27 ist durch einen ersten Elektrodenkontakt 28 gebildet, über den der Fernregler 26 mit einem ersten Potential 29 beaufschlagt werden kann. Hierzu ist der Elektrodenkontakt 28 von der Elektrode 13 des Schweißgerätes 1 kontaktierbar, so dass mit der Stromquelle 2 bzw. der Steuervorrichtung 4 des Schweißgerätes 1 eine elektrische Verbindung herstellbar ist. Weiters weist der Fernregler 26 ein weiteres, durch einen Werkstückkontakt 30 gebildetes Kontaktelement 27 auf, an das ein weiteres Potential 31 angelegt werden kann. Der Werkstückkontakt 30 ist hierzu mit dem Werkstück 16 verbunden, so dass der Werkstückkontakt 30 ebenfalls mit der Stromquelle 2 bzw. der Steuervorrichtung 4 des Schweißgerätes 1 verbunden ist. Es sei an dieser Stelle die Möglichkeit angemerkt, den Werkstückkontakt 30 anstelle mit dem Werkstück 16 mit einem beliebigen Leiter zu verbinden, der das Potential 31 führt. Beispielsweise kann der Werkstückkontakt 30 mit einem Erd- bzw. Null-Potential einer nicht näher dargestellten Energieversorgungsstruktur verbunden werden.

Erfindungsgemäß ist zumindest ein weiteres Kontaktelement 27 des Fernreglers 26 durch einen weiteren Elektrodenkontakt 32 gebildet, der ebenso wie der erste Elektrodenkontakt 28 mit der Elektrode 13 in Berührung gebracht werden kann, um den Fernregler 26 mit der Stromquelle 2 bzw. der Steuervorrichtung 4 des Schweißgerätes 1 zu verbinden.

An dem über die Elektrodenkontakte 28, 32 mit der Stromquelle 2 verbundenen Fernregler 26 sind Parameter der Stromquelle 2 aufrufbar und/oder veränderbar. Hierzu ist zumindest einer der beiden Elektrodenkontakte 28, 32 zur Verstellung von einem oder mehreren Parametern der Stromquelle 2, insbesondere zur Erhöhung oder Verringerung des Absolutwertes des zumindest einen Schweißparameters, ausgebildet. Vorzugsweise ist zusätzlich zumindest einer der Elektrodenkontakte 28, 32 zur Abfrage bzw. zum Aufruf von einem oder mehreren Parametern der Stromquelle 2 ausgebildet. Beispielsweise kann durch Kontaktierung des Elektrodenkontaktes 28 eine Verringerung eines Werts und durch Kontaktierung des Elektrodenkontaktes 32 eine Erhöhung des Werts eines Schweißparameters durchgeführt werden. Diese Änderung des Werts kann nun sofort über die Schweißleitung 17 an die Steuervorrichtung 4 des Schweißgerätes übermittelt werden, so dass eine Online-Konfiguration des Schweißgerätes 1 über den Fernregler 26 möglich ist. Weiters besteht die Möglichkeit, dass ein Elektrodenkontakt 28 zur Anzeige von Schweißparametern und/oder zur Bestätigung von Einstellungen ausgebildet ist und der weitere Elektrodenkontakt 32 zur Verstellung ausgebildet ist. Somit kann über den Elektrodenkontakt 32 beispielsweise in einer Schleife der Wert eines Schweißparameters eingestellt und gespeichert werden, wobei erst nach Kontaktierung des ersten Elektrodenkontakts 28 diese Einstellung an die Steuervorrichtung 4 des Schweißgerätes übertragen wird.

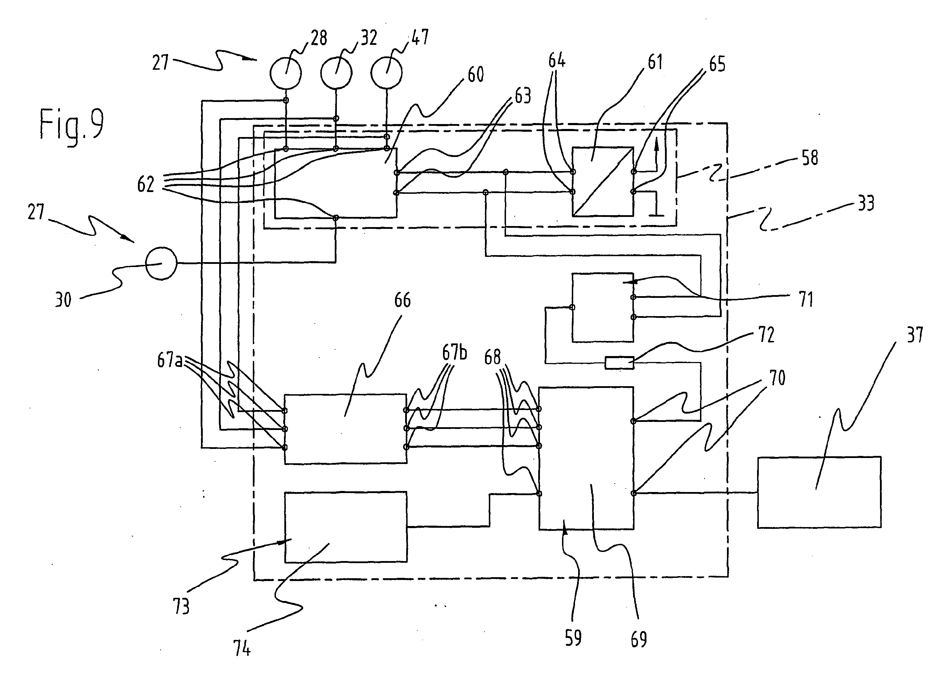

Der Fernregler 26 weist eine Steuereinrichtung 33 auf, die mit den Elektrodenkontakten 28, 32 und mit dem Werkstückkontakt 30 verbunden ist. Die Steuereinrichtung 33 ist zur Verarbeitung der an den Elektrodenkontakten 28, 32 eingehenden Signale und/oder zur Durchführung einer Signalübertragung über die Elektrodenkontakte 28, 32 an die Steuervorrichtung 4 des Schweißgerätes 1 ausgebildet. Die Steuervorrichtung 33 ist ebenso dazu ausgebildet, die an den Elektrodenkontakten 28, 32 bzw. dem Werkstückkontakt 30 anliegende Spannung, die von der Stromquelle 2 des Schweißgerätes 1 erzeugt wird, zur eigenen Energieversorgung zu nutzen. Weiters weist die Steuereinrichtung 33 einen Speicher auf, in dem einer oder mehrere der zuletzt über den Fernregler 26 eingestellten Schweißparameter bzw. deren Werte gespeichert sind. Die genauere Ausgestaltung der Steuereinrichtung 33 wird anhand der Fig. 9 beschrieben.

Der Fernregler 26 weist einen ersten Betriebszustand auf, in dem der Fernregler 26 von der Stromquelle 2 des Schweißgerätes 1 entkoppelt bzw. getrennt ist, wie dies in Fig. 3 gezeigt ist. Im ersten Betriebszustand ist der Fernregler 26 in einer möglichen Ausführungsvariante deaktiviert. In einem weiteren Betriebszustand ist der Fernregler 26 mit der Stromquelle 2 des Schweißgerätes 1 über die Schweißleitungen 17, 18 gekoppelt, wodurch eine Energieversorgung des Fernreglers 26 erfolgt und dieser aktiviert bzw. einsatzbereit ist, wie in Fig. 4 gezeigt. Es sei die Möglichkeit angemerkt, im Fernregler 26 einen temporären Energiespeicher, beispielsweise eine Induktivität oder Kapazität, vorzusehen, der bei an den Fernregler 26 gekoppelten Schweißleitungen 17, 18 geladen wird, so dass der Fernregler 26 über eine durch den Energiespeicher bestimmte Zeitspanne auch bei Entkopplung von der Stromquelle 2 einsatzbereit ist. Beispielsweise kann bei von der Stromquelle 2 entkoppelten Fernregler 26 dieser eingeschränkt betriebsfähig sein, insbesondere in einem Konfigurationsmodus oder dergleichen, in dem in Art eines Offline-Modus Schweißparameter voreingestellt werden können, die beim nächsten Verbindungsaufbau an das Schweißgerät 1 übertragen werden, oder es werden lokale Einstellungen am Fernregler 26 vorgenommen.

Im aktivierten Betriebszustand des Fernreglers 26 wird über das Signal an der Elektrode 13, an der vor dem Aufsetzen auf den Elektrodenkontakt 28 bzw. 32 eine Leerlaufspannung anliegt, zumindest einer der Schweißparameter, beispielsweise einen Strom, eine Spannung, eine Pulsweite, eine Frequenz usw., von der Steuereinrichtung 33 erkannt, der über den Fernregler 26 visualisierbar und bedarfsweise veränderbar ist. Es ist hierbei eine Ausbildung des Schweißgerätes 1 vorteilhaft, bei der bei hergestellter Verbindung der Elektrode 13 mit dem Elektrodenkontakt 28 bzw. 32 dies von der Steuervorrichtung 4 des Schweißgerätes erkannt wird und gegebenenfalls ein an den Fernregler 26 angepasstes bzw. modifiziertes Signal von der Stromquelle 2 ausgegeben wird, wie dies bei bekannten Fernreglern der Fall sein kann.

Bei der in den Fig. 2 bis 4 dargestellten Ausführungsvariante sind zwei Elektrodenkontakte 28, 32 vorgesehen, über die sämtliche Einstellungsmöglichkeiten, die im Fernregler 26 integriert sind, vorgenommen werden können. Einer der Elektrodenkontakte 28, 32 ist zur Verringerung des Wertes des aktuell zu verarbeitenden Schweißparameters ausgebildet und der weitere Elektrodenkontakt 28, 32 ist zur Erhöhung dieses Schweißparameters ausgebildet. Zur Kennzeichnung des den einzelnen Elektrodenkontakten 28, 32 zugewiesenen Funktionen sind am Fernregler 26 zwei Zeichen 34 angeordnet. Das erste Zeichen 34 kennzeichnet durch ein Minus-Symbol den Elektrodenkontakt 28 derart, dass dessen Funktion zur Verringerung des Wertes eines Schweißparameters von einem Benutzer erkennbar ist, wogegen das weitere Zeichen 34 durch ein Plus-Symbol die Funktion des Elektrodenkontakts 32 zur Erhöhung eines Schweißparameterwerts kennzeichnet. Die Zeichen 34 sind beispielsweise an bzw. in einem Gehäuse 36 des Fernreglers 26 angebracht, beispielsweise eingeprägt, eingraviert, aufgedruckt, aufgeklebt oder dergleichen.

Zur Visualisierung des Werts eines Schweißparameters am Fernregler 26 weist dieser eine Anzeige 37 auf, welche beispielsweise durch ein Display 38 gebildet sein kann. Das Display 38 ist durch eine aus dem Stand der Technik bekannte Vorrichtung zur Anzeige von alphanumerischen Informationen gebildet, z.B. eine Siebensegmentanzeige, ein LCD (Liquid Crystal Display) oder dergleichen. Die Anzeige 37 ist mit der Steuereinrichtung 33 des Fernreglers 26 verbunden, so dass am Fernregler 26 verarbeitete Informationen bzw. Signale an der Anzeige 37 darstellbar sind. Hierbei ist es möglich, dass die Anzeige 37 den absoluten Wert eines entsprechenden Schweißparameters darstellt und/oder einen relativen, insbesondere prozentuellen Wert des Maximalwerts eines Schweißparameters darstellt.

Ist ein Kontakt zwischen der Elektrode 13 und einem der Elektrodenkontakte 28, 32 hergestellt, ist die Steuereinrichtung 33 zur Ausgabe von Informationen an die Anzeige 37 ausgebildet, so dass der momentane Wert eines Schweißparameters dargestellt wird. Sind nur zwei Elektrodenkontakte 28, 32 vorhanden, weist gemäß der Erfindung die Steuervorrichtung 33 eine Einrichtung auf, mit der der gespeicherte Wert eines Schweißparameters angezeigt wird und bei Bedarf über denselben Elektrodenkontakt 28, 32 verstellbar ist. Gemäß der Erfindung ist diese Einrichtung durch ein Verzögerungsglied gebildet, so dass der gespeicherte Wert über eine vordefinierte Zeitdauer angezeigt wird, worauf nach Ablauf der Zeitdauer die Verstellung über den Elektrodenkontakt 28, 32 durchführbar ist. Weiters kann diese Einrichtung durch einen Zähler gebildet sein, so dass der gespeicherte Wert bei einer ersten Berührung des Elektrodenkontakts 28, 32 angezeigt wird und bei Lösen und Wiederherstellen der Berührung innerhalb einer gewissen Zeitspanne der Zähler dies erkennt und eine Verstellung des Werts ermöglicht. Bei Verstellung eines Schweißparameters kann an der Anzeige 37 sofort der korrigierte Wert angezeigt werden.

Der Werkstückkontakt 30 des Fernreglers 26 ist ausführungsgemäß an einer Rückseite 39 des Fernreglers 26 angeordnet, wobei die Elektrodenkontakte 28, 32 an einer der Rückseite 39 gegenüberliegenden Vorderseite 40 des Gehäuses 36 angeordnet sind. Das Gehäuse 36 des Fernreglers 26 ist bevorzugt flach und beispielsweise quaderförmig ausgebildet, d.h. die Breite 41 und Länge 42 des Gehäuses 36 sind gegenüber seiner Dicke 43 größer dimensioniert. Die Anzeige 37 ist im gezeigten Ausführungsbeispiel an der Vorderseite 40 des Gehäuses 36 angeordnet. Das Gehäuse 36 weist jeweils eine Öffnung für jedes der Kontaktelemente 27 auf. Im gezeigten Ausführungsbeispiel sind im Gehäuse 36 an der Vorderseite 40 zwei Öffnungen für die Elektrodenkontakte 28, 32 und an der Rückseite 39 eine Öffnung für den Werkstückkontakt 30 angeordnet, über die eine Kontaktfläche 44 der Elektrodenkontakte 28, 32 und des Werkstückkontakts 30 zugänglich sind. Die Anzeige 37 ist bevorzugt im Inneren des Gehäuses 36 angeordnet, und das Gehäuse 36 zumindest in einem Bereich 45, über der Anzeige 37 durchsichtig ausgebildet, so dass die Anzeige 37 von außen einsehbar und durch das Gehäuse 36 geschützt ist.

Durch eine derartige Ausgestaltung des Gehäuses 26 ist eine einfache Handhabung des Fernreglers 26 möglich, da durch einfaches Auflegen des Fernreglers 26 mit der Rückseite 39 auf das Werkstück 16 der Werkstückkontakt 30 dieser mit dem entsprechenden Potential 31 verbunden ist, so dass anschließend durch einen Benutzer, ohne den Schweißbrenner 10 aus der Hand zu legen, mit der Elektrode 13 des Schweißbrenners 10 sämtliche verfügbare Einstellungen am Fernregler 26 vorgenommen werden können. Hierzu kann an der Rückseite 39 ein Befestigungselement 46 angeordnet sein, über das der Fernregler 26 am Werkstück 16 lösbar fixiert werden kann. Im gezeigten Ausführungsbeispiel ist das Befestigungselement 46 gleichzeitig durch den Werkstückkontakt 30 gebildet, wobei der Werkstückkontakt 30 magnetisch ausgebildet ist. Der Fernregler 26 kann jedoch auch eigenständige Befestigungselemente zur Verbindung mit einem Werkstück 16 bzw. Teil welches das entsprechende Potential 31 führt, aufweisen, wobei hierbei aus dem Stand der Technik bekannte Verbindungs- bzw. Befestigungsvorrichtungen verwendet werden können.

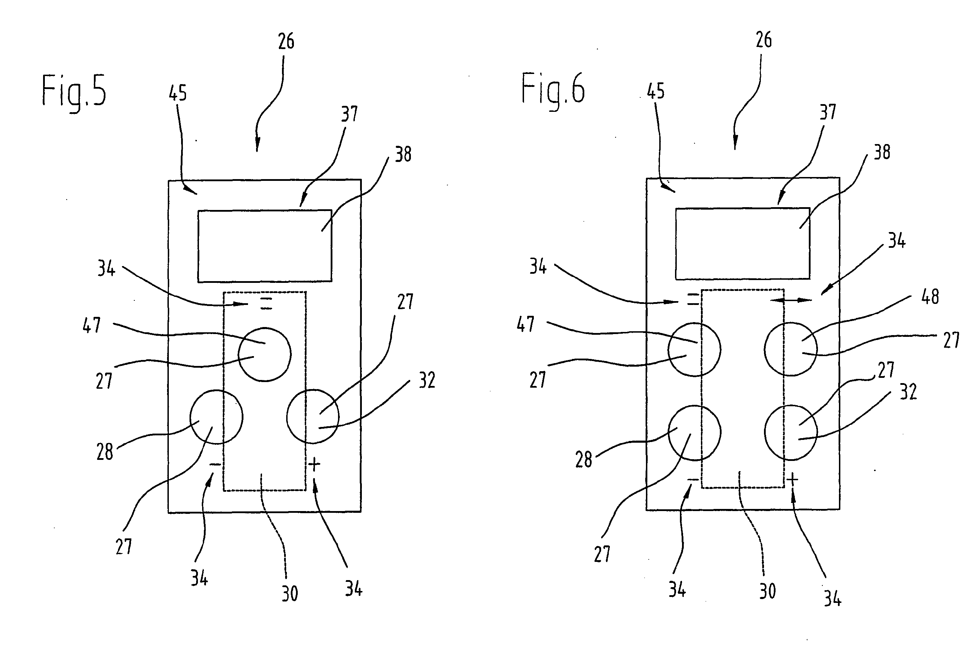

In der Fig. 5 ist eine weitere Ausführungsvariante des Fernreglers 26 dargestellt, bei der der Fernregler 26 einen weiteren Elektrodenkontakt 47, d.h. insgesamt vier Kontaktelemente 27 die durch drei Elektrodenkontakte 28, 32, 47 und den Werkstückkontakt 30 gebildet sind, aufweist. Hierbei ist der erste Elektrodenkontakt 28 zur Anzeige eines zu verstellenden Schweißparameters ausgebildet. Die beiden weiteren Elektrodenkontakte 32, 47 sind zur Verstellung des Schweißparameters, insbesondere zur Erhöhung und Verringerung des Schweißparameters, ausgebildet, wobei diese Verstellung wie bereits vorstehend beschrieben erfolgt.

Eine weitere Ausführungsvariante des Fernreglers 26 ist in Fig. 6 dargestellt, bei der der Fernregler 26 einen weiteren Elektrodenkontakt 48, d.h. insgesamt fünf Kontaktelemente 27 die durch vier Elektrodenkontakte 28, 32, 47, 48 und einen Werkstückkontakt 30 gebildet sind, aufweist. Hierbei ist der erste Elektrodenkontakt 28 zur Anzeige eines zu verstellenden Schweißparameters ausgebildet. Die beiden weiteren Elektrodenkontakte 32, 47 sind zur Verstellung des Schweißparameters, insbesondere zur Erhöhung und Verringerung des Schweißparameters, ausgebildet. Der vierte Elektrodenkontakt 48 ist zur Selektion bzw. zum Wechseln von unterschiedlichen Schweißparametern ausgebildet.

Erfindungsgemäß ist vorgesehen, dass zumindest ein Schweißparameter über den Fernregler 26 aufrufbar bzw. veränderbar ist. Insbesondere kann bei einem Fernregler 26 für nur einen Schweißparameter der Schweißstrom des Schweißgerätes 1 als Schweißparameter durch den Fernregler 26 verarbeitet werden. Gemäß dem Ausführungsbeispiel nach Fig. 6 sind mehrere Schweißparameter vom Fernregler 26 verarbeitbar, wozu eine Selektion des zu verarbeitenden Schweißparameters über den vierten Elektrodenkontakt 48 möglich ist. Es sei an dieser Stelle jedoch angemerkt, dass die Selektion des Schweißparameters auch bei Fernreglern 26 ohne speziellen Elektrodenkontakt 48 möglich sein kann, wobei hierfür ein oder mehrere Elektrodenkontakte 28, 32; 47 mit mehreren Funktionen, beispielsweise den Funktionen "Parameter anzeigen" und "Parameter wechseln", belegt sein können, zwischen denen mittels vorstehend beschriebenen Zeitgliedern, Kontaktzähler oder dergleichen bevorzugt zyklisch umgeschaltet werden kann.

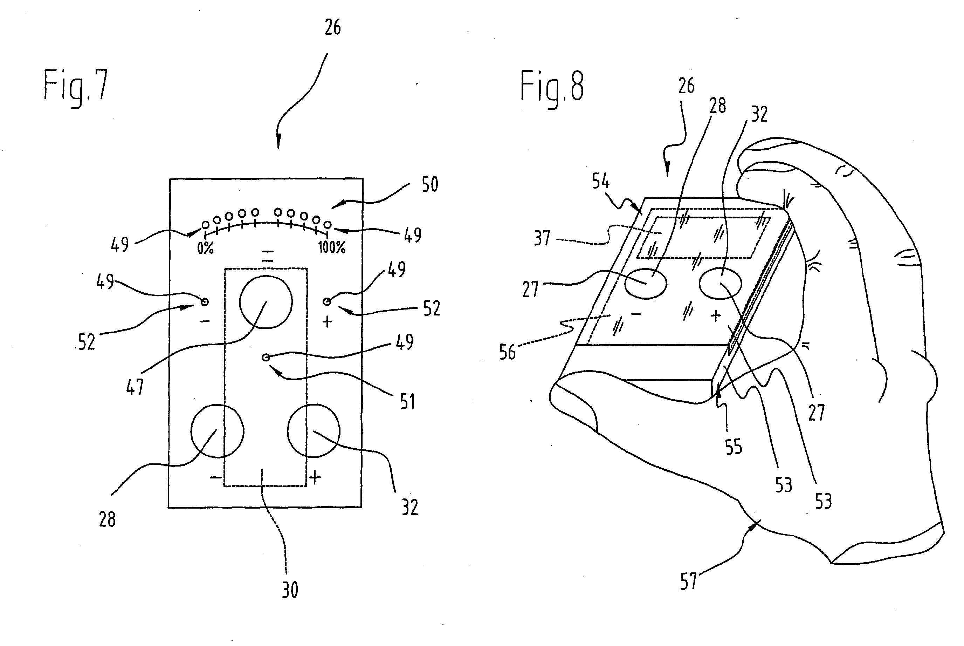

In Fig. 7 ist eine weitere Ausführungsvariante des Fernreglers 26 gezeigt, bei der die Anzeige 37 mehrere diskrete Leuchtmittel 49, insbesondere LED's aufweist. Die Leuchtmittel 49 bilden eine Skala 50, über die ein relativer bzw anteilsmäßiger Wert vom Maximalwert eines Schweißparameters darstellbar ist. Beträgt der aktuelle Wert des Schweißparameters beispielsweise 50% vom Maximalwert, ist die Hälfte der Leuchtmittel 49 in Betrieb. Die Leuchtmittel 49 werden hierfür bevorzugt hintereinander von links nach rechts aktiviert bzw. von rechts nach links deaktiviert. Weiters besteht die Möglichkeit, dass jedem Leuchtmittel 49 ein Wertebereich eines Schweißparameters zugewiesen ist, so dass nur jenes Leuchtmittel 49 aktiv ist, in dessen Wertebereich der Wert des Schweißparameters fällt.

Weiters ist gemäß Fig. 7 eine Anzeige (Anzeigemittel) 51 zur Anzeige eines Kontakts der Kontaktelemente 27 vorgesehen, die beispielsweise ebenfalls durch ein Leuchtmittel 49 gebildet ist. Die Kontakt-Anzeige 51 ist zur Anzeige des Betriebszustandes des Fernreglers 26 ausgebildet, wobei die Kontakt-Anzeige 51 bei hergestellter Verbindung zwischen der Elektrode 13 mit einem Elektrodenkontakt 28; 32; 47; 48 und dem Werkstückkontakt 30 mit dem Werkstück 16 aktiviert ist.

Weiters kann eine Anzeige (Anzeigemittel) 52 zur Anzeige der Polarität an dem mit der Elektrode 13 in Verbindung stehenden Kontrollelement vorgesehen sein, welche den Pluspol oder Minuspol anzeigt. Im gezeigten Ausführungsbeispiel ist die Polaritäts-Anzeige 52 ebenfalls durch zwei Leuchtmittel 49 gebildet, wobei das eine Leuchtmittel 49 nur bei positiver Polarität an der Elektrode 13 aktiviert und das andere Leuchtmittel 49 nur bei negativer Polarität an der Elektrode 13 aktiviert ist. Es sei angemerkt, dass die Statusinformationen der Kontakt-Anzeige 51 und/oder der Polaritäts-Anzeige 52 selbstverständlich auch bei einer als Display 38 ausgebildeten Anzeige 37 als Leuchtmittel 49 vorhanden sein können, oder es können diese Statusinformationen direkt über das Display 38 ausgegeben werden.

In Fig. 8 ist eine Ausführungsvariante des Fernreglers 26 mit zwei Elektrodenkontakten 28, 32 dargestellt, bei der zumindest ein Teil des Gehäuses 36 durchsichtig bzw. transparent ausgebildet ist. Insbesondere weist das Gehäuse 36 mehrere Teile 53 auf, wobei zumindest ein Oberteil 54 und zumindest ein Unterteil 55 vorgesehen ist. Im Ausführungsbeispiel ist der Oberteil 54 aus transparentem Material, insbesondere aus Kunststoff, gebildet.

Der Unterteil 55 kann ebenfalls aus gegebenenfalls transparentem Material bzw. aus Kunststoff gebildet sein, wobei die Möglichkeit besteht, dass der Unterteil 55 bzw. weitere Teile 53 opak ausgebildet bzw. aus einem anderen Material, beispielsweise einer metallischen Legierung, insbesondere einem Aluminium-Magnesium-Gussteil oder dergleichen, gebildet ist. Das Gehäuse 36 kann auch aus nur einem einzigen bevorzugt transparent ausgebildeten Teil 53 bestehen und die Steuereinrichtung 33 und die Anzeige 37 darin integriert, beispielsweise eingegossen oder eingeschweißt, sein.

Im Inneren des Gehäuses 36 kann die Steuereinrichtung 33 und die Anzeige 37 an einer gemeinsamen Platine 56 angeordnet sein. Die Elektrodenkontakte 28, 32; 47; 48 und der Werkstückkontakt 30 sind über dauerhafte Kontaktstellen, beispielsweise Lötstellen, mit der Steuereinrichtung 33 über die Platine 56 verbunden. Somit weist der Fernregler 26 keine beweglichen Teile auf, wodurch in vorteilhafter Weise ein robuster und wenig fehleranfälliger Fernregler 26 geschaffen wird. Weiters ist durch die Nutzung von elektrischen Kontaktelementen 27 als Einstellorgane im Vergleich zu Fernreglern mit.handverstellbaren Einstellorganen, wie aus dem Stand der Technik bekannte Potentiometer oder dergleichen, eine sehr geringe Baugröße des Fernreglers 26 realisierbar, ohne dass der Funktionsumfang des Fernreglers 26 eingeschränkt wird. Wie in Fig. 8 gezeigt, ist der Fernregler 26 vorzugsweise so dimensioniert, dass dieser bequem in einer einzelnen Hand 57 eines Benutzers platzierbar ist. Der Fernregler 26 weist hierzu vorzugsweise etwa die Größe einer Scheckkarte auf, beispielsweise eine Breite 41 von 20 bis 100 mm, insbesondere 40 bis 70 mm, eine Länge 42 von 50 bis 150 mm, insbesondere 60 bis 120 mm, und eine Dicke 43 von 5 bis 30 mm, insbesondere 10 bis 20 mm (siehe Fig. 2 und 3). Der Fernregler 26 kann somit bequem in einer Tasche der Bekleidung des Benutzers mitgeführt werden, ohne dass dieser bei der Durchführung von weiteren Tätigkeiten beeinträchtigt wird.

In Fig. 9 ist das Blockschaltbild einer möglichen Ausführungsvariante des Fernreglers 26 mit drei Elektrodenkontakten 28, 32, 47 dargestellt. Der Fernregler 26 beinhaltet die Steuereinrichtung 33, die Anzeige 37 und die Kontaktelemente 27, insbesondere die Elektrodenkontakte 28, 32, 47 und den Werkstückkontakt 30.

Die Kontaktelemente 27 sind mit einer der Steuereinrichtung 33 zugeordneten Spannungsversorgung 58 verbunden. Die Spannungsversorgung 58 ist zur Versorgung einer Logikschaltung 59 mit der für diese notwendigen Spannungspegel ausgebildet, wobei die Eingangsspannung an der Spannungsversorgung 58 die Leerlaufspannung an der Elektrode 13 ist. Um eine definierte Spannung für die Logikschaltung 59 bereitzustellen kann die Spannungsversorgung 58 einen Gleichrichter 60 und bedarfsweise einen Spannungswandler 61 aufweisen. Der Gleichrichter 60 ist an Eingängen 62 mit den Kontaktelementen 27 verbunden. Ein Ausgang 63 des Gleichrichters 60 ist gegebenenfalls mit einem Eingang 64 des Spannungswandlers 61 verbunden. Der Gleichrichter 60 ermöglicht die Verwendung des Fernreglers 26 für Schweißgeräte 1 mit wechselnder bzw. negativer Polarität an der Elektrode 13. Der mit dem Ausgang 63 des Gleichrichters 60 verbundene Spannungswandler 61 ist zur Erzeugung einer Spannung mit definiertem Pegel an einem Ausgang 65 ausgebildet, mit dem beispielsweise die Logikschaltung 59 versorgt wird.

Weiters weist die Steuereinrichtung 33 einen Analog/DigitalWandler 66 auf, der an einem Eingang 67a mit den Elektrodenkontakten 28, 32, 47, 48 verbunden ist und an einem Ausgang 67b mit Eingängen 68 der Logikschaltung 59 verbunden ist. Jedem Elektrodenkontakt 28, 32, 47, 48 ist hierbei ein Eingang 68 der Logikschaltung 59 zugeordnet, wodurch über die Logikschaltung 59 detektiert werden kann, an welchem Elektrodenkontakt 28, 32, 47, 48 eine Spannung anliegt und welcher Schweißparameter bzw. Wert anliegt. Der Logikschaltung 59 ist ein Speicher zugeordnet, in welchem Schweißparameter bzw. deren Werte gespeichert werden können. Die Logikschaltung 59 ist zu diesem Zweck vorzugsweise durch einen Mikrokontroller 69 gebildet, wodurch die Steuerung des Fernreglers 26 mittels einer im Mikrokontroller 69 hinterlegten und bedarfsweise austauschbaren Programmlogik erfolgen kann.

Ein Ausgang 70 der Logikschaltung 59 ist über ein Schaltelement 71 mit den Elektrodenkontakten 28, 32, 47, 48 verbunden. Beispielsweise ist das Schaltelement 71, gegebenenfalls über einen ohmschen Widerstand 72, mit einem Ausgang 70 der Logikschaltung 59 und weiters mit einem Ausgang 65 des Spannungswandlers 61 und einem Ausgang 63 des Gleichrichters 60 verbunden. Der Zustand des Schaltelements 71 wird über den Ausgang 70 der Logikschaltung 59 gesteuert, wodurch am Ausgang des Schaltelements 71 eine pulsierende Spannung, insbesondere eine hochfrequente Spannung, erzeugt werden kann. Somit kann durch Kopplung des Ausgangs des Schaltelements 71 mit den Elektrodenkontakten 28, 32, 47, 48 dort eine pulsierende Spannung einer von der Logikschaltung 59 vorgegebenen Frequenz angelegt werden. Die Frequenz wird dabei aus dem Wert bzw. der Art des aktuell zu verarbeitenden Schweißparameters von der Logikschaltung 59 berechnet. Die pulsierende Spannung wird bei Anliegen der Leerlaufspannung der Elektrode 13 auf diese aufmoduliert, wobei in der Steuervorrichtung 4 des Schweißgerätes 1 entsprechende Mittel zum Demodulieren dieser Spannung vorgesehen sind. Über diese Art der Signalübertragung kann über den Fernregler 26 eine Einstellung der Stromquelle 2 des Schweißgerätes 1 vorgenommen werden, wobei derartige Vorrichtungen und Verfahren zur Signalmodulation bzw. Überlagerung bei Schweißgeräten aus dem Stand der Technik bekannt sind, weshalb an dieser Stelle nicht näher auf diese eingegangen wird.

Weiters ist die Anzeige 37 mit einem Ausgang 70 der Logikschaltung 59 verbunden, so dass eine von der Logikschaltung 59 vorgegebene Visualisierung der Schweißparameter erfolgen kann.

Wie im Ausführungsbeispiel dargestellt, kann der Steuereinrichtung 33 weiters ein Sicherheitssystem 73 zugeordnet sein, welches ein eindeutiges Identifikationsmerkmal aufweist. Das Sicherheitssystem 73 kann beispielsweise durch ein drahtloses Übertragungssystem, insbesondere ein Funkübertragungssystem 74, beispielsweise ein RFID (Radio Frequency Identification)-System, mit einem Transponder, gebildet sein, welches Signale von einer Sende/Empfangseinrichtung bzw. Steuervorrichtung 4 des Schweißgerätes 1 empfangen und/oder an diese übertragen kann. Somit kann der Fernregler 26 mit einer Schlüsselfunktion ausgestattet sein, die ein drahtloses Absperren oder ein Entsperren des Schweißgerätes 1 ermöglicht. Auf die nähere Ausgestaltung von RFID-Systemen wird nicht näher eingegangen, da diese aus dem Stand der Technik bekannt sind.

Weiters besteht die Möglichkeit, dass im Speicher der Steuereinrichtung 33 unterschiedliche Voreinstellungen bzw. zusammengehörig parametrierte Gruppen von Schweißparametereinstellungen, sogenannte Jobs, konfigurierbar und in einem nichtflüchtigen Speicher hinterlegt sind. Somit ist eine Job-Auswahl möglich, wodurch nach einmaliger Konfiguration eines Jobs dieser rasch wieder verwendet werden kann. Weiters kann die Möglichkeit vorgesehen sein, verschiedene Benutzer-Profile am Fernregler 26 zu erstellen bzw. sein Setup über den Fernregler 26 durchzuführen. Eine Job-Auswahl, die Möglichkeit Benutzer-Profile zu verwalten oder die Durchführung eines Setups, wie dies mit dem erfindungsgemäßen Fernregler 26 möglich ist, ist bereits aus Einstellgeräten für Schweißgeräte aus dem Stand der Technik bekannt, weshalb an dieser Stelle ebenfalls nicht näher darauf eingegangen wird.

Weiters ist es möglich, dass bei einem Einsatz eines Schweißgerätes mit einer Hilfsspannungsquelle die Versorgung und die Kommunikation mit dem Fernregler über die Hilfsspannungsquelle erfolgt, d.h., dass das Leistungsteil des Schweißgerätes deaktiviert bleibt und nur diese Hilfsspannungsquelle aktiviert ist.

## Patentansprüche

1. Fernregler (26) für ein Schweißgerät (1) mit einem Gehäuse (36), einer Steuereinrichtung (33) und mehreren mit der Steuereinrichtung (33) verbundenen Kontaktelementen (27), wobei ein Kontaktelement (27) durch einen Werkstückkontakt (30) zur Herstellung einer Verbindung mit einem Werkstück (16) gebildet ist und zumindest zwei weitere Kontaktelemente (27) durch Elektrodenkontakte (28) zur Herstellung einer Verbindung mit einer Elektrode (13) des Schweißgerätes (1) gebildet sind, wobei der eine Elektrodenkontakt (28) zur Erhöhung und der zweite Elektrodenkontakt (32) zur Verringerung des Werts eines Schweißparameters ausgebildet ist und somit durch Kontaktierung der Elektrodenkontakte (28, 32) mit der Elektrode (13) des Schweißgerätes (1) der Wert des Schweißparameters veränderbar ist, und wobei eine Spannungsversorgung (58) über die Kontaktelemente (27) durch das Schweißgerät (1) erfolgt und die Steuereinrichtung (33) mit einer Anzeige (37) verbunden ist, die zur Visualisierung des Werts bzw. des Typs des zu verändernden Schweißparameters ausgebildet ist **dadurch gekennzeichnet, dass** die Steuereinrichtung (33) ein Verzögerungsglied äufweist, wodurch beim Kontaktieren der Elektrode (13) mit einem der Kontaktelemente (27) der gespeicherte Wert eines Schweißparameters über eine vordefinierte Zeitdauer an der Anzeige (37) angezeigt wird, worauf nach Ablauf der Zeitdauer die Verstellung des Werts des Schweißparameters durchführbar ist.

2. Fernregler (26) nach Anspruch 1, **dadurch gekennzeichnet, dass** die Steuereinrichtung (33) einen Speicher aufweist, in dem zumindest der zuletzt über einen der zumindest zwei Elektrodenkontakte (28, 32) eingestellte oder aufgerufene Schweißparameter hinterlegt ist.

3. Fernregler (26) nach Anspruch 1 oder 2, **dadurch gekennzeichnet, dass** die Steuereinrichtung (33) zur Ausgabe eines in Abhängigkeit des Werts eines Schweißparameters ermittelten Signals ausgebildet ist und das Signal an zumindest ein Kontaktelement (27) für die Elektrode (13) angelegt wird.

4. Fernreglers (26) nach einem der Ansprüche 1 bis 3, **dadurch gekennzeichnet, dass** die Anzeige (37) zur Darstellung eines anteilsmäßigen, insbesondere prozentuellen, Werts eines Schweißparameters ausgebildet ist.

5. Fernreglern (26) nach einem der Ansprüche 1 bis 4, **dadurch gekennzeichnet, dass** die Anzeige (37) durch ein Display (38) oder durch eine Skala (50) bildende Leuchtmittel (49), insbesondere LEDs, gebildet ist.

6. Fernregler (26) nach einem der Ansprüche 1 bis 5, **dadurch gekennzeichnet, dass** die Steuereinrichtung (33) mit einer Anzeige (51) zur Anzeige eines vorliegenden Kontaktes der Kontaktelemente (27) mit der Elektrode (13) und dem Werkstück (16) verbunden ist.

7. Fernregler (26) nach einem der Ansprüche 1 bis 6, **dadurch gekennzeichnet, dass** die Steuereinrichtung (33) mit einer Anzeige (52) zur Anzeige der Polarität an dem mit der Elektrode (13) in Verbindung stehenden Kontaktelement (27) verbunden ist.

8. Fernregler (26) nach einem der Ansprüche 1 bis 7, **dadurch gekennzeichnet, dass** die Steuereinrichtung (33) eine Spannungsversorgung (56), insbesondere eine Leistungselektronik, zur Spannungswandlung der Leerlaufspannung des Schweißgerätes (1) in eine entsprechende Spannung zur Versorgung der Komponenten der Steuereinrichtung (33) aufweist.

9. Fernregler (26) nach einem der Ansprüche 1 bis 8, **dadurch gekenneichnet, dass** die Steuereinrichtung (33) eine Logikschaltung (59), insbesondere einen Mikrokontroller (69), aufweist.

10. Fernregler (26) nach einem der Ansprüche 1 bis 9, **dadurch gekennzeichnet, dass** die Steuereinrichtung (33) ein Schaltelement (71) zur Erzeugung eines bevorzugt hochfrequenten Modulationssignals zur Einkoppelung in die Leerlaufspannung der Elektrode (13) aufweist.

11. Fernregler (26) nach Anspruch 10, **dadurch gekennzeichnet, dass** das Schaltelement (71) an einem Steuereingang mit einem Ausgang (70) der Logikschaltung (59) und weiteres mit der Spannungsversorgung (58) verbunden ist und ein Ausgang des Schaltelements (71) mit zumindest einem der Kontaktelemente (27) gekoppelt ist.

12. Fernregler (26) nach einem der Ansprüche 1 bis 11, **dadurch gekennzeichnet, dass** der Werkstückkontakt (30) zur Kontaktierung eines Werkstücks (16) an der Rückseite (39) des Gehäuses (36) angeordnet ist und der Werkstückkontakt (30) bevorzugt magnetisch ausgebildet ist.

13. Fernregler (26) nach einem der Ansprüche 1 bis 12, **dadurch gekennzeichnet, dass** das Gehäuse (36) im Wesentlichen Scheckkarten-förmig ausgebildet ist.

14. Fernregler (26) nach Anspruch 13, **dadurch gekennzeichnet, dass** das Gehäuse (36) eine Breite (41) von 20 bis 100 mm, insbesondere 40 bis 70 mm, eine Länge (42) von 50 bis 150 mm, insbesondere 60 bis 120 mm und eine Dicke (43) von 5 bis 30 mm, insbesondere 10 bis 20 mm aufweist.

15. Fernregler (26) nach einem der Ansprüche 1 bis 14, **dadurch gekennzeichnet, dass** das Gehäuse (36) zumindest teilweise transparent ausgebildet ist.

16. Fernregler (26) nach einem der Anspruche 1 bis 15, **dadurch gekennzeichnet, dass** die Steuereinrichtung (33) und gegebenenfalles die Anzeigen (37, 51, 52) im Gehäuse (36) integriert, insbesondere eingegossen, sind und nur Kontaktflächen (44) der Kontaktelemente (27) von außen zugänglich sind.

17. Fernregler (26) nach einem der Ansprüche 1 bis 16, **dadurch gekennzeichnet, dass** ein weiteres Kontaktelement (27) durch einen dritten Elektrodenkontakt (47) gebildet ist, wobei der erste Elektrodenkontakt (28) zur Anzeige des Werts bzw. Typs eines zu verstellenden Schweißparameters ausgebildet ist, wogegen die beiden weiteren Elektrodenkontakte (32, 47) zur Verstellung des Werts des Schweißparameters, insbesondere zur Erhöhung bzw. Verringerung des Wertes des Schweißparameters, ausgebildet sind.

18. Fernregler (26) nach einem der Ansprüche 1 bis 17, **dadurch gekennzeichnet, dass** zumindest ein weiteres Kontaktelement (27) durch einen Elektrodenkontakt (48) gebildet ist, welcher zur Selektion eines Schweißparameters ausgebildet ist.

19. Fernregler (26) nach einem der Ansprüche 1 bis 18, **dadurch gekennzeichnet, dass** die Steuereinrichtung (33) ein Sicherheitssystem (73) zur vorzugsweise drahtlosen Absperrung oder Entsperrung des Schweißgerätes (1) aufweist.

20. Fernregler (26) nach Anspruch 19, **dadurch gekennzeichnet, dass** das Sicherheitssystem (73) durch ein Funkübertragungssystem (74), insbesondere ein RFID-System, gebildet ist.

## Claims

1. A remote controller (26) for a welding device (1) with a housing (36), a control unit (33) and several contact elements (27) connected with the control unit (33), wherein one contact element (27) is comprised of a workpiece contact (30) for establishing a connection with a workpiece (16), and wherein at least two further contact elements (27) are comprised of electrode contacts (28) for establishing a connection with an electrode (13) of the welding device (1), wherein the one electrode contact (28) is designed for increasing the value of a welding parameter and the second electrode contact (32) is designed for reducing the same, the value of the welding parameter thus being changeable by contacting the electrode contacts (28, 32) with the electrode (13) of the welding device (1), and wherein a voltage supply (58) is effected by the welding device (1) via the contact elements (27), and wherein the control unit (33) is connected with a readout (37) designed for visualization of the value and/or type of the welding parameter to be changed, **characterized in that** the control unit (33) comprises a delay member, whereby the stored value of a welding parameter will be displayed on the readout (37) over a predefined period of time when the electrode (13) contacts one of the contact elements (27), wherein the value of the welding parameter will be adjustable after the period has expired.

2. The remote controller (26) according to claim 1, **characterized in that** the control unit (33) has a storage, in which at least the welding parameter which has lastly been adjusted or called via one of the at least two electrode contacts (28, 32) is deposited.

3. The remote controller (26) according to claim 1 or 2, **characterized in that** the control unit (33) is designed for outputting a signal which has been detected as a function of the value of a welding parameter, and that the signal is applied to at least one contact element (27) for the electrode (13).

4. The remote controller (26) according to any one of claims 1 to 3, **characterized in that** the readout (37) is designed for illustrating a proportional, in particular percentual, value of a welding parameter.

5. The remote controller (26) according to any one of claims 1 to 4, **characterized in that** the readout (37) is comprised of a display (38) or a scale(50)-forming illumination means (49), in particular LEDs.

6. The remote controller (26) according to any one of claims 1 to 5, **characterized in that** the control unit (33) is connected with a readout (51) for displaying a present contact of the contact element (27) with the electrode (13) and the workpiece (16).

7. The remote controller (26) according to any one of claims 1 to 6, **characterized in that** the control unit (33) is connected with a readout (52) for displaying the polarity prevailing at the contact element (27) connected with the electrode (13).

8. The remote controller (26) according to any one of claims 1 to 7, **characterized in that** the control unit (33) comprises a voltage supply (58), in particular a power electronics, for voltage conversion of the idle voltage of the welding device (1) into an appropriate voltage for supplying the components of the control unit (33).

9. The remote controller (26) according to any one of claims 1 to 8, **characterized in that** the control unit (33) comprises a logic circuit (59), in particular a microcontroller (69).

10. The remote controller (26) according to any one of claims 1 to 9, **characterized in that** the control unit (33) comprises a switching element (71) for generating a preferably high-frequency modulation signal for coupling into the idle voltage of the electrode (13).

11. The remote controller (26) according to claim 10, **characterized in that** the switching element (71), at one control input, is connected with an output (70) of the logic circuit (59) and is furthermore connected with the voltage supply (58), and that one output of the switching element (71) is coupled with at least one contact element (27).

12. The remote controller (26) according to any one of claims 1 to 11, **characterized in that** the workpiece contact (30) is arranged for contacting a workpiece (16) at the rear side (39) of the housing (36), and that the workpiece contact (30) is preferably designed to be magnetic.

13. The remote controller (26) according to any one of claims 1 to 12, **characterized in that** the housing (36) is designed in a substantially checkcard-type manner.

14. The remote controller (26) according to claim 13, **characterized in that** the housing (36) has a width (41) of from 20 to 100 mm, in particular of from 40 to 70 mm, a length (42) of from 50 to 150 mm, in particular of from 60 to 120 mm, and a thickness (43) of from 5 to 30 mm, in particular of from 10 to 20 mm.

15. The remote controller (26) according to any one of claims 1 to 14, **characterized in that** the housing (36) is designed to be at least partially transparent.

16. The remote controller (26) according to any one of claims 1 to 15, **characterized in that** the control unit (33), and optionally the readouts (37, 51, 52) are integrated, and in particular molded, into the housing (36), and that only the contact surfaces (44) of the contact elements (27) are accessible from the outside.

17. The remote controller (26) according to any one of claims 1 to 16, **characterized in that** a further contact element (27) is comprised of a third electrode contact (47), wherein the first electrode contact (28) is designed for displaying the value and/or the type of a welding parameter to be adjusted, whereas the two further electrode contacts (32, 47) are designed for adjusting the value of the welding parameter, in particular for increasing and/or reducing the value of the welding parameter.

18. The remote controller (26) according to any one of claims 1 to 17, **characterized in that** at least one further contact element (27) is comprised of an electrode contact (48) which is designed for selecting a welding parameter.

19. The remote controller (26) according to any one of claims 1 to 18, **characterized in that** the control unit (33) has a safety system (73) for blocking or deblocking the welding device (1) in a preferably wireless manner.

20. The remote controller (26) according to claim 19, **characterized in that** the safety system (73) is comprised of a radio-transmission system (74), in particular an RFID system.

## Revendications

1. Dispositif de réglage à distance (26) pour appareil de soudage (1), comprenant un boîtier (36), un dispositif de commande (33) et plusieurs éléments de contact (27) connectés au dispositif de commande (33), dans lequel un élément de contact (27) est formé par un contact de pièce à fabriquer (30) pour instaurer une liaison avec une pièce à fabriquer (16) et au moins deux autres éléments de contact (27) sont formés par des contacts d'électrode (28) pour instaurer une liaison avec une électrode (13) de l'appareil de soudage (1), dans lequel le premier contact d'électrode (28) se présente sous une forme permettant d'augmenter la valeur d'un paramètre de soudage et le second contact d'électrode (32) sous une forme permettant de diminuer la valeur d'un paramètre de soudage et la valeur du paramètre de soudage peut donc être modifiée par mise en contact des contacts d'électrode (28, 32) avec l'électrode (13) de l'appareil de soudage (1), et dans lequel une alimentation en tension (58) se fait par le biais des éléments de contact (27) par l'appareil de soudage (1) et le dispositif de commande (33) est connecté à un dispositif d'affichage (37), qui est conçu pour visualiser la valeur ou le type du paramètre de soudage à modifier, **caractérisé en ce que** le dispositif de commande (33) présente un élément de retard, qui permet d'afficher la valeur enregistrée d'un paramètre de soudage lors de la mise en contact de l'électrode (13) avec l'un des éléments de contact (27) sur une période de temps prédéfinie sur le dispositif d'affichage (37), ET le réglage de la valeur du paramètre de soudage peut être réalisée à l'issue de la période de temps.

2. Dispositif de réglage à distance (26) selon la revendication 1, **caractérisé en ce que** le dispositif de commande (33) présente une mémoire, dans laquelle est mémorisé au moins le paramètre de soudage réglé ou appelé en dernier sur un des au moins deux contacts d'électrode (28, 32).

3. Dispositif de réglage à distance (26) selon la revendication 1 ou 2, **caractérisé en ce que** le dispositif de commande (33) est conçu pour délivrer un signal établi en fonction de la valeur d'un paramètre de soudage et le signal est appliqué sur au moins un élément de contact (27) pour l'électrode (13).

4. Dispositif de réglage à distance (26) selon l'une quelconque des revendications 1 à 3, **caractérisé en ce que** le dispositif d'affichage (37) est conçu pour représenter une valeur proportionnelle, en particulier en pourcentage, d'un paramètre de soudage.

5. Dispositif de réglage à distance (26) selon l'une quelconque des revendications 1 à 4, **caractérisé en ce que** le dispositif d'affichage (37) est formé d'un écran (38) ou de moyen d'éclairage (49) formant une échelle (50), en particulier de DEL.

6. Dispositif de réglage à distance (26) selon l'une quelconque des revendications 1 à 5, **caractérisé en ce que** le dispositif de commande (33) est connecté à un dispositif d'affichage (51) pour afficher un contact présent des éléments de contact (27) avec l'électrode (13) et la pièce à fabriquer (16).

7. Dispositif de réglage à distance (26) selon l'une quelconque des revendications 1 à 6, **caractérisé en ce que** le dispositif de commande (33) est connecté à un dispositif d'affichage (52) pour afficher la polarité sur l'élément de contact (27) connecté à l'électrode (13).

8. Dispositif de réglage à distance (26) selon l'une quelconque des revendications 1 à 7, **caractérisé en ce que** le dispositif de commande (33) présente une alimentation en tension (58), en particulier une électronique de puissance, pour convertir la tension en circuit ouvert de l'appareil de soudage (1) en une tension correspondante pour alimenter les composants du dispositif de commande (33).

9. Dispositif de réglage à distance (26) selon l'une quelconque des revendications 1 à 8, **caractérisé en ce que** le dispositif de commande (33) présente un circuit logique (59), en particulier un microcontrôleur (69).

10. Dispositif de réglage à distance (26) selon l'une quelconque des revendications 1 à 9, **caractérisé en ce que** le dispositif de commande (33) présente un élément de commutation (71) pour générer un signal de modulation de préférence en hautes fréquences destiné à être injecté dans la tension en circuit ouvert de l'électrode (13).

11. Dispositif de réglage à distance (26) selon la revendication 10, **caractérisé en ce que** l'élément de commutation (71) est connecté sur une entrée de commande à une sortie (70) du circuit logique (59) et également à l'alimentation en tension (58) et une sortie de l'élément de commutation (71) est couplée à au moins un des éléments de contact (27).

12. Dispositif de réglage à distance (26) selon l'une quelconque des revendications 1 à 11, **caractérisé en ce que** le contact de pièce à fabriquer (30) est aménagé pour la mise en contact d'une pièce à fabriquer (16) sur la face arrière (39) du boîtier (36) et le contact de pièce à fabriquer (30) se présente de préférence sous une forme magnétique.

13. Dispositif de réglage à distance (26) selon l'une quelconque des revendications 1 à 12, **caractérisé en ce que** le boîtier (36) se présente sensiblement sous la forme d'une carte bancaire.

14. Dispositif de réglage à distance (26) selon la revendication 13, **caractérisé en ce que** le boîtier (36) présente une largeur (41) de 20 à 100 mm, en particulier de 40 à 70 mm, une longueur (42) de 50 à 150 mm, en particulier de 60 à 120 mm, et une épaisseur (43) de 5 à 30 mm, en particulier de 10 à 20 mm.

15. Dispositif de réglage à distance (26) selon l'une quelconque des revendications 1 à 14, **caractérisé en ce que** le boîtier (36) se présente sous une forme au moins partiellement transparente.

16. Dispositif de réglage à distance (26) selon l'une quelconque des revendications 1 à 15, **caractérisé en ce que** le dispositif de commande (33) et, éventuellement, les dispositifs d'affichage (37, 51, 52) sont intégrés au boîtier (36), en particulier y sont coulés, et seules les surfaces de contact (44) des éléments de contact (27) sont accessibles de l'extérieur.

17. Dispositif de réglage à distance (26) selon l'une quelconque des revendications 1 à 16, **caractérisé en ce qu'**un autre élément de contact (27) est formé par un troisième contact d'électrode (47), lequel premier contact d'électrode (28) est conçu pour afficher la valeur ou le type d'un paramètre de soudage à régler, tandis que les deux autres contacts d'électrode (32, 47) sont conçus pour régler la valeur du paramètre de soudage, en particulier pour augmenter ou réduire la valeur du paramètre de soudage.

18. Dispositif de réglage à distance (26) selon l'une quelconque des revendications 1 à 17, **caractérisé en ce qu'**au moins un autre élément de contact (27) est formé par un contact d'électrode (48), qui est conçu pour sélectionner un paramètre de soudage.

19. Dispositif de réglage à distance (26) selon l'une quelconque des revendications 1 à 18, **caractérisé en ce que** le dispositif de commande (33) présente un système de sécurité (73) pour un blocage ou un déblocage, de préférence sans fil, de l'appareil de soudage (1).

20. Dispositif de réglage à distance (26) selon la revendication 19, **caractérisé en ce que** le système de sécurité (73) est formé d'un système de transmission radio (74), en particulier un système de type IDRF.
